# EUROPEAN PATENT SPECIFICATION

(11) **EP 2 163 778 B1**
(45) Date of publication and mention of the grant of the patent: **18.09.2013**
(21) Application number: 09169961.1
(22) Date of filing: 10.09.2009
(51) Int. Cl.: F16D 23/06

(54) **Synchronizer for vehicle transmissions with pre-synchronizing device having spring-loaded balls.**
Synchronisiereinrichtung für eine Kraftfahrzeug-Getriebeeinrichtung mit einem Vorsynchronisierungselement mit gefedernden Kugeln.
Dispositif de synchronisation pour une transmission de véhicule avec élément de pré-synchronisation équipé de billes sollicitées par un ressort.

(30) Priority: 11.09.2008 IT TO20080668
(43) Date of publication of application: 17.03.2010
(73) Proprietor: OERLIKON GRAZIANO S.P.A., 10090 Cascine Vica - Rivoli (TO) (IT)
(72) Inventor: Colombo, Silvano, I-10070, TRAVES (Torino) (IT); Turco, Giorgio, I-10090, BRUINO (Torino) (IT)
(74) Representative: Rondano, Davide

(56) References cited:
- EP-A- 0 521 843
- EP-A1- 1 209 376
- DE-A1- 3 803 845
- DE-A1- 4 121 707
- DE-A1-102006 037 183
- DE-U1- 20 022 345
- GB-A- 1 249 289

## Description

The present invention refers to a synchronizer for vehicle transmissions with pre-synchronizing device having spring-loaded balls, as specified in the preamble of independent claim 1.

GB 1 335 865 discloses a synchronizer intended to torsionally couple a shaft of a vehicle gearbox selectively with either of a pair of gearwheels idly mounted on that shaft. According to this known example, the synchronizer basically comprises a hub torsionally coupled to the shaft, an actuating sleeve slidable axially (i.e. parallel to the axis of the shaft) under control of a fork-like control member, a pre-synchronizing device radially interposed between the hub and the actuating sleeve, and a pair of synchronizing rings (only one ring in case of a single synchronizer, i.e. of a synchronizer associated to one single gearwheel to torsionally couple or uncouple that wheel to/from the shaft) each having an outer engagement toothing arranged to mesh with a corresponding inner engagement toothing of the actuating sleeve and, on the radially inner side, a conical surface arranged to be brought into contact with a corresponding conical surface of the respective gearwheel. The pre-synchronizing device comprises a plurality of balls (typically three balls at 120°) loaded by springs so as to partially engage in respective notches provided on the inner cylindrical surface of the actuating sleeve, each ball projecting radially outwards from a radial through hole provided in a respective block or urging member axially interposed between the two synchronizing rings. In the above-mentioned known example of construction, the spring is a helical spring which is received with its radially inner end in a seat provided in the hub and insists with its radially outer end against the ball. When the actuating sleeve is axially moved in a given direction to torsionally couple a given idle gearwheel associated thereto with the shaft, in a first step of the engagement operation the balls of the pre-synchronizing device, which are held by the respective springs inside the respective notches of the actuating sleeve, are axially moved with this latter and draw along with them the respective blocks. The blocks urge in turn the synchronizing ring associated to the gearwheel to be coupled so as to bring the conical surface of the ring into contact with the conical surface of the gearwheel. As a result of the friction torque between the conical surfaces of the synchronizing ring and of the gearwheel, the synchronizing ring rotates relative to the actuating sleeve by such an angle that the toothing of the synchronizing ring prevents the actuating sleeve from moving axially further towards the engagement toothing of the gearwheel. Once the angular speeds of the synchronizing ring (i.e. of the hub and of the actuating sleeve) and of the gearwheel have been synchronized, the actuating sleeve can be moved axially further towards the gearwheel to cause its engagement toothing to mesh with the engagement toothing of the gearwheel. This further axial movement of the actuating sleeve causes the balls to disengage from the notches. During this step the balls are urged radially inwards by the profile of the notches of the actuating sleeve.

The known arrangement described above suffers however from the drawback that the springs of the pre-synchronizing device are continuously stressed not only under compression but also under bending in both directions, and are therefore early subject to breakage.

A synchronizer for vehicle transmissions is also known which comprises a pre-synchronizing device having a plurality of studs which are loaded by springs and are provided with integrated ball heads. DE 41 21 707, which anticipates the features set forth in the preamble of independent claim 1, discloses for instance a synchronizer for vehicle transmissions which is provided with a pre-synchronizing device comprising a plurality of studs each incorporating a ball head, a corresponding plurality of springs each tending to urge a respective stud radially outwards, and a corresponding plurality of support members which are carried by the hub of the synchronizer so as to be tiltable with respect to this latter and act each as a support for the radially inner end of a respective spring. Such a known arrangement suffers however from the drawback of the serious wear of the ball heads of the studs of the pre-synchronizing device due to sliding.

It is therefore an object of the present invention to provide a synchronizer for vehicle transmissions which is less affected by wear problems and is then able to ensure a longer life than the prior art discussed above.

This and other objects are fully achieved according to the invention by virtue of a synchronizer for vehicle transmissions having the features set forth in the characterizing part of independent claim 1.

Since the balls are made as separate components from the studs and are arranged so as to be free to roll on respective support plates or planes of the studs, they do not slide but roll relative to the respective studs and to the actuating sleeve and are therefore less subject to wear. Moreover, the balls may be made of a material different from that of the studs, in particular of a material of higher hardness (and therefore of higher wear resistance), thus ensuring a longer life of the synchronizer without significantly increasing the cost of this latter.

The features and the advantages of the invention will become apparent from the following detailed description, given purely by way of non-limiting example with reference to the appended drawings, in which:
Figure 1 is an axial section view of a synchronizer for vehicle transmissions provided with a pre-synchronizing device according to an embodiment not forming part of the present invention;
Figure 2 is an elevation view of a part of the pre-synchronizing device of the synchronizer of Figure 1;
Figure 3 is an elevation view of a part of the pre-synchronizing device of a synchronizer according to the invention; and
Figure 4 is an elevation view of a part of the pre-synchronizing device according to a further embodiment of a synchronizer not forming part of the invention.

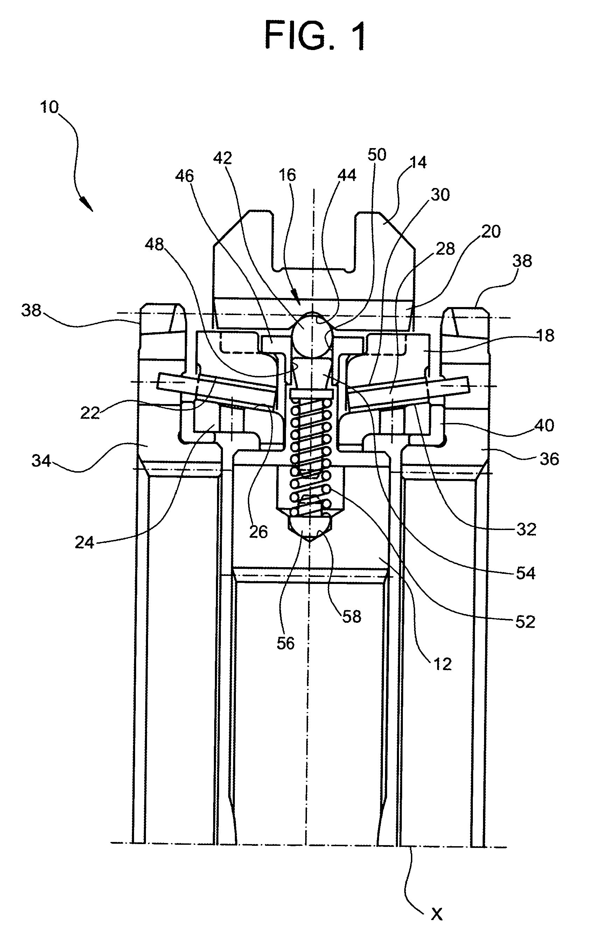

With reference first to Figure 1, a synchronizer (in the present case a double-cone synchronizer) for a vehicle transmission is generally indicated 10. The synchronizer 10 basically comprises:
- a hub 12 which is torsionally coupled, in the mounted condition, to a shaft (not shown) of the transmission, for instance by means of splined coupling;
- an actuating sleeve 14 slidable axially (i.e. parallel to the axis of the shaft, indicated X in Figure 1) under control of a fork-like control member (not shown);
- a pre-synchronizing device, generally indicated 16, radially interposed between the hub 12 and the actuating sleeve 14;
- a pair of synchronizing rings 18 each having an outer engagement toothing (which cannot be seen in Figure 1 as being angularly offset relative to the section plane) arranged to mesh with a corresponding inner engagement toothing 20 of the actuating sleeve 14 and, on the radially inner side, a conical surface 22;
- a pair of inner rings 24 each having, on the radially outer side, a conical surface 26;
- a pair of intermediate rings 28 each having, on the radially outer side, a first conical surface 30 arranged to be brought into contact with the conical surface 22 of the associated synchronizing ring 18 and, on the radially inner side, a second conical surface 32 arranged to be brought into contact with the conical surface 26 of the associated inner ring 24;
- a pair of engagement ring gears 34 each comprising a hub portion 36 torsionally coupled, for instance by means of splined coupling, with a respective idle gearwheel (not shown) and an outer engagement toothing 38 intended to mesh with the inner engagement toothing 20 of the actuating sleeve 14 to allow the transmission of the torque from the shaft to the idle gearwheel via the synchronizer 10; and
- a pair of spacer rings 40 axially and radially interposed each between the hub portion 36 of the respective engagement ring gear 34 and the respective inner ring 24.

The synchronizing rings 18 and the inner rings 24 are drivingly connected for rotation with the hub 12 and the actuating sleeve 14, whereas the intermediate rings 28 are drivingly connected for rotation each with the respective engagement ring gear 34. On the contrary, the spacer rings 40 are free to rotate both relative to the engagement ring gears 34 and relative to the inner rings 24 between which they are interposed.

The pre-synchronizing device 16 basically comprises:
- a plurality of balls 42 (for instance three balls arranged at 120°, only one of which can be seen in Figure 1), partially received in respective notches 44 provided on the inner cylindrical surface of the actuating sleeve 14;
- a corresponding plurality of blocks or urging members 46 axially interposed between the two synchronizing rings 18 and each having a radial through hole 48 from which a respective ball 42 projects radially outwards, the ball 42 being preferably (though not necessarily) constrained to the block 46, for instance by means of a slight flare 50 provided in the radially outer end portion of the hole 48;

- a corresponding plurality of springs 52, advantageously made as helical springs, each acting indirectly on a respective ball 42 so as to urge this latter radially outwards, i.e. into the respective notch 44;
- a corresponding plurality of studs 54, made as separate components from the balls 42 and radially interposed each between a respective ball 42 and a respective spring 52; and
- a corresponding plurality of support members 56, each received in a respective socket 58 of the hub 12 to support the bottom end of a respective spring 52.

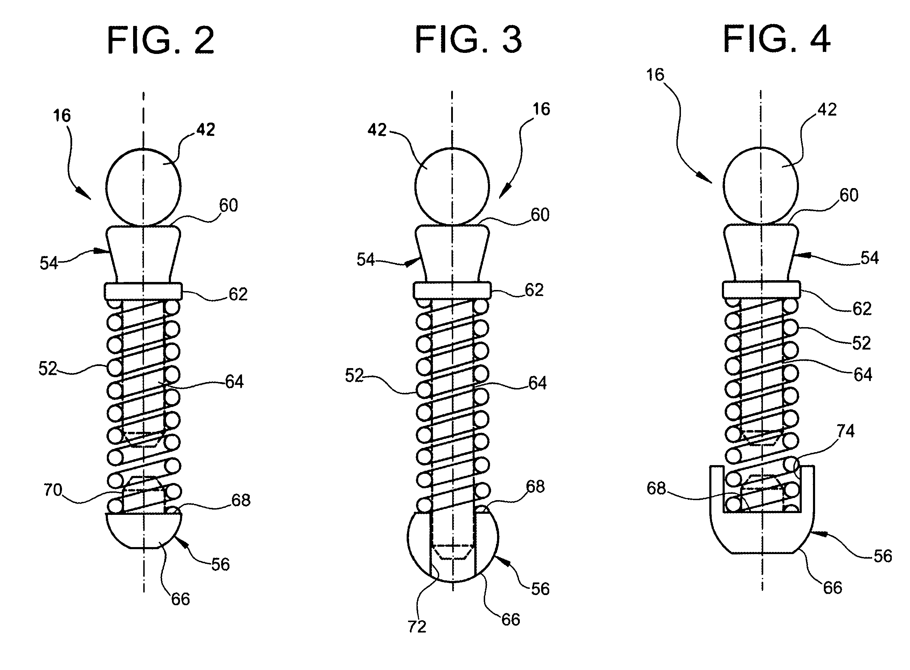

With reference now in particular to Figure 2, each stud 54 comprises a top support plate or plane 60 for supporting the respective ball 42, an intermediate shoulder 62 against which the top end (i.e. the radially outer end) of the respective spring 52 insists and a cylindrical shank 64 inserted into the spring 52 for guiding this latter. Preferably, the cylindrical shank 64 is inserted into the spring through at least half the length of the same spring. As can be seen in Figure 1, the top plate or plane 60 of the stud 54 is inserted into the radial through hole 48 of the block 46 so as to be drawn along by this latter in the axial translational movement resulting from the axial translational movement of the actuating sleeve 12 during the pro-synchronizing step. Each support member 56 comprises a support portion 66 in the shape of a spherical segment which rests on the bottom of the respective socket 58 in the hub 12 so as to allow the support member 56 to tilt relative to the hub 12, in particular in an axial plane (plane of the drawing of Figure 1), and has on its top a support plane 68fur supporting the bottom end (i.e. the radially inner end) of the respective spring 52. A cylindrical shank 70 extends radially from the support plane 68 to guide the bottom end portion of the spring 52.

Advantageously, the balls 42 are made of a material with a high wear resistance, such as for instance standard bearing steel, whereas the studs 54 and the support members 56 are made of a material suitable to be machined and having a lower hardness than that of the material of the balls.

A pre-synchronizing device of a synchronizer for vehicle transmissions according to the invention is illustrated in Figure 3, where parts and elements identical or corresponding to those of Figure 2 have been given the same reference numerals. According to this embodiment, each stud 54 comprises a top support plate or plane 60 for supporting the respective ball 42, an intermediate shoulder 62 against which the top end (i.e. the radially outer end) of the respective spring 52 insists and a cylindrical shank 64 inserted into the spring 52 to guide this latter. With respect to the embodiment of Figure 2, the shank 64 of the stud 54 is longer than the spring 52, whereby it projects radially inwards from the bottom end of this latter. Each support member 56 is made as a ball which is deprived of a spherical cap so as to form at its top (i.e. on the radially outer side) a support plane 68 for supporting the bottom end (i.e. the radially inner end) of the respective spring 52. Also in this case the support member 56 forms a support portion 66 in the shape of a spherical segment resting on the bottom of the respective socket 58 in the hub 12 so as to allow the support member 56 to tilt relative to the hub 12, in particular in an axial plane. Unlike the embodiment of Figure 2, the support member 56 does not have a cylindrical shank for guiding the bottom end portion of the spring 52 (the spring is in fact wholly guided by the cylindrical shank 64 of the stud 54), but has a radial hole 72 into which the bottom end portion of the cylindrical shank 64 of the stud 54 is inserted and guided.

A further embodiment of the pre-synchronizing device of a synchronizer for vehicle transmissions is illustrated in Figure 4, where parts and elements identical or corresponding to those of Figures 2 and 3 have been given the same reference numerals. According to this embodiment, each stud 54 comprises a top support plate or plane 60 for supporting the respective ball 42, an intermediate shoulder 62 against which the top end (i.e. the radially outer end) of the respective spring 52 insists and a cylindrical shank 64 inserted into the spring 52 through the largest part of the length of the spring to guide this latter. Each support member 56 comprises a support portion 66 in the shape of a spherical segment resting on the bottom of the respective socket 58 in the hub 12 so as to allow the support member 56 to tilt relative to the hub 12, in particular in an axial plane. The support member 56 has a cylindrical socket 74 coaxial with the cylindrical shank 64 of the respective stud 54, as well as with the respective spring 52. The bottom of the cylindrical socket 74, indicated 68, acts as a support plane for supporting the bottom end (i.e. the radially inner end) of the respective spring 52.

The operation of the pre-synchronizing device 16 according to the invention is similar to that of the known pre-synchronizing devices, such as that illustrated in the introductory part of the description, and therefore will not be described in detail. It is only pointed out that by virtue of the provision of the stud which is interposed between the spring and the ball and is provided with a guide portion inserted into the spring and extending at least through the largest part of the length of this latter, as well as by virtue of the possibility for the support member on which the bottom end of the spring rests to tilt, the spring does not bend as a result of the axial translational movement of the block, as occurs on the contrary with the known pre-synchronizing device described at the beginning of the specification, but substantially tilts as a rigid body about the centre of rotation defined by the contact between the support member and the associated socket in the hub. Moreover, by virtue of the ball being made as a separate component form the stud, it is free to rotate both relative to this latter and relative to the actuating sleeve. Wear is thus distributed all over the surface of the ball.

The life of the synchronizer, in terms of numbers of actuations, is therefore significantly longer than in the prior art. This is particularly advantageous in case of application on vehicle robotized transmissions, where the number of actuations occurring during the life of the transmission is far higher than that of the conventional vehicle manual transmissions.

Naturally, the principle of the invention remaining unchanged, the embodiments and manufacturing details may be widely varied with respect to those described and illustrated purely by way of non-limiting example, without thereby departing from the scope of the invention as defined in the appended claims.

For instance, the invention is equally well applicable to a single synchronizer, i.e. to a synchronizer associated to one single gearwheel. Likewise, the invention is equally well applicable to a single-cone synchronizer or to a multi-cone synchronizer.

## Claims

1. Synchronizer (10) for vehicle transmissions, comprising
a hub (12),
an actuating sleeve (14),
a pre-synchronizing device (16) radially interposed between the hub (12) and the actuating sleeve (14), and
at least one synchronizing ring (18) having a conical surface (22);
wherein the pre-synchronizing device (16) comprises
a plurality of balls (42) partially received in respective notches (44) provided in the actuating sleeve (14),
a corresponding plurality of blocks (46) each of which has a radial through hole (48) in which a respective ball (42) is received so as to project radially outwards, whereby the blocks are urged via the balls (42) against the at least one synchronizing ring (18) when the actuating sleeve (14) is axially moved towards said ring,
a corresponding plurality of springs (52) radially interposed each between a respective ball (42) and the hub (12) to exert on the ball (42) a force tending to hold the ball within the respective notch (44) in the actuating sleeve (14);
a corresponding plurality of studs (54) radially interposed each between a respective ball (42) and a respective spring (52), each stud (54) comprising an abutment surface (62) for the radially outer end of the respective spring (52) and a shank (64) inserted into the respective spring (52), and
a corresponding plurality of support members (56) radially interposed each between the hub (12) and the respective spring (52) and resting on the hub (12) so as to be tiltable relative thereto,
**characterized in that** the balls (42) are made as separate components from the studs (54) and are each arranged so as to be free to rotate on a support plate or plane (60) of the respective stud (54), and **in that** each stud (54) has a cylindrical shank (64) which is longer than the respective spring (52) and wherein each support member (56) has a radial hole (72) into which a radially inner end portion of the cylindrical shank (64) of the respective stud (54) is inserted and guided.

2. Synchronizer (10) according to claim 1, wherein the pre-synchronizing device (16) comprises three balls (42) arranged at 120°.

3. Synchronizer (10) according to claim 1 or claim 2, wherein the radial through hole (48) of each block (46) is flared at its radially outer end so as to retain radially the respective ball (42).

4. Synchronizer (10) according to any of the preceding claims, wherein each support member (56) comprises a support portion (66) in the shape of a spherical segment resting on the bottom of a respective socket (58) provided in the hub (12).

5. Synchronizer (10) according to any of the preceding claims, wherein each support member (56) has a support plane (68) for supporting the radially inner end of the respective spring (52).

6. Synchronizer (10) according to any of the preceding claims, wherein the balls (42) are made of a material having a higher hardness than that of the studs (54).

## Patentansprüche

1. Synchronisierer (10) für Fahrzeuggetriebe, umfassend:
eine Nabe (12),
eine Betätigungsbuchse (14),
eine Vorsynchronisierungsvorrichtung (16), die radial zwischen der Nabe (12) und
der Betätigungsbuchse (14) gelagert ist, und
wenigstens einen Synchronisierungsring (18), der eine konische Oberfläche (22) aufweist;
wobei die Vorsynchronisierungsvorrichtung (16) umfasst:
eine Mehrzahl von Kugeln (42), die teilweise in jeweiligen in der Betätigungsbuchse (14) vorgesehenen Einbuchtungen (44) aufgenommen sind,
eine entsprechende Anzahl von Blöcken (46), von denen jeder ein radiales Durch-gangsloch (48) aufweist, in dem eine jeweilige Kugel (42) derart aufgenommen ist, dass sie radial nach außen vorsteht, wodurch die Blöcke über die Kugeln (42) gegen den wenigstens einen Synchronisierungsring (18) gedrängt werden, wenn die Betätigungsbuchse (14) axial hin zu dem Ring bewegt wird,
eine entsprechende Mehrzahl von Federn (52), die radial jeweils zwischen einer jeweiligen Kugel (42) und der Nabe (12) gelagert sind, um auf die Kugel (42) eine Kraft auszuüben, die dazu neigt, die Kugel innerhalb der jeweiligen Einbuchtung (44) in der Betätigungsbuchse (14) zu halten;
eine entsprechende Mehrzahl von Bolzen (54), die radial jeweils zwischen einer jeweiligen Kugel (42) und einer jeweiligen Feder (52) gelagert sind, wobei jeder Bolzen (54) eine Anlageoberfläche (62) für das radial äußere Ende der jeweiligen Feder (52) und einen in die jeweilige Feder (52) eingeführten Schaft (64) umfasst, und
eine entsprechende Mehrzahl von Stützelementen (56), die radial jeweils zwischen der Nabe (12) und der jeweiligen Feder (52) gelagert sind und an der Nabe (12) derart ruhen, dass sie relativ zu dieser kippbar sind,
**dadurch gekennzeichnet, dass** die Kugeln (42) als von den Bolzen (54) separate Bestandteile ausgebildet und jeweils derart angeordnet sind, dass sie sich frei an einer Stützplatte oder Ebene (60) des jeweiligen Bolzens (54) drehen können, und jeder Bolzen (54) einen zylindrischen Schaft (64) aufweist, der länger als die jeweilige Feder (52) ist, und wobei jedes Stützelement (56) ein radiales Loch (72) aufweist, in dem ein radial innerer Endabschnitt des zylindrischen Schaftes (64) des jeweiligen Bolzens (54) eingeführt und geführt ist.

2. Synchronisierer (10) nach Anspruch 1, wobei die Vorsynchronisierungsvorrichtung (16) drei unter 120°angeordnete Kugeln (42) umfasst.

3. Synchronisierer (10) nach Anspruch 1 oder 2, wobei das radiale Durchgangsloch (48) eines jeden Blocks (46) an seinem radial äußeren Ende derart aufgeweitet ist, dass es die jeweilige Kugel (42) radial zurückhält.

4. Synchronisierer (10) nach einem der vorhergehenden Ansprüche, wobei jedes Stützelement (56) einen Stützabschnitt (66) in Form eines sphärischen Segmentes umfasst, das an der Unterseite bzw. am Boden eines jeweiligen in der Nabe (12) vorgesehenen Sockels (58) ruht.

5. Synchronisierer (10) nach einem der vorhergehenden Ansprüche, wobei jedes Stützelement (56) eine Stützebene (68) zum Stützen des radial inneren Endes der jeweiligen Feder (52) aufweist.

6. Synchronisierer (10) nach einem der vorhergehenden Ansprüche, wobei die Kugeln (42) aus einem Material bestehen, das eine höhere Härte als die Bolzen (54) aufweist.

## Revendications

1. Dispositif de synchronisation (10) pour transmissions de véhicules, comprenant :
un moyeu (12),
un manchon d'actionnement (14),
un dispositif de présynchronisation (16) intercalé radialement entre le moyeu (12) et le manchon d'actionnement (14), et
au moins une bague de synchronisation (18) ayant une surface conique (22) ;
dans lequel le dispositif de présynchronisation (16) comprend :
une pluralité de billes (42) logées partiellement dans des encoches respectives (44) prévues dans le manchon d'actionnement (14),
une pluralité de blocs correspondants (46) comportant chacun un trou traversant radial (48) dans lequel une bille respective (42) est logée de manière à faire saillie radialement vers l'extérieur, moyennant quoi les blocs sont poussés par l'intermédiaire des billes (42) contre ladite au moins une bague de synchronisation (18) quand le manchon d'actionnement (14) est déplacé axialement vers ladite bague,
une pluralité de ressorts correspondants (52) intercalés radialement chacun entre une bille respective (42) et le moyeu (12) pour exercer sur la bille (42) une force tendant à maintenir la bille dans l'encoche respective (44) du manchon d'actionnement (14) ;
une pluralité de tenons correspondants (54) intercalés radialement chacun entre une bille respective (42) et un ressort respectif (52), chaque tenon (54) comprenant une surface d'appui (62) pour l'extrémité radialement extérieure du ressort respectif (52) et une tige (64) insérée dans le ressort respectif (52), et
une pluralité d'éléments de support correspondants (56) intercalés radialement chacun entre le moyeu (12) et le ressort respectif (52) et reposant sur le moyeu (12) de manière à pouvoir s'incliner par rapport à celui-ci,
**caractérisé en ce que** les billes (42) se présentent sous la forme de composants distincts des tenons (54) et sont agencées chacune pour être libres de tourner sur une plaque ou plan de support (60) du tenon respectif (54), et **en ce que** chaque tenon (54) a une tige cylindrique (64) qui est plus longue que le ressort respectif (52) et dans lequel chaque élément de support (56) a un trou radial (72) dans lequel une partie d'extrémité radialement intérieure de la tige cylindrique (64) du tenon respectif (54) est insérée et guidée.

2. Dispositif de synchronisation (10) selon la revendication 1, dans lequel le dispositif de présynchronisation (16) comprend trois billes (42) disposées à 120°.

3. Dispositif de synchronisation (10) selon la revendication 1 ou 2, dans lequel le trou traversant radial (48) de chaque bloc (46) est évasé au niveau de son extrémité radialement extérieure afin de retenir radialement la bille respective (42).

4. Dispositif de synchronisation (10) selon l'une quelconque des revendications précédentes, dans lequel chaque élément de support (56) comprend une partie de support (66) sous la forme d'un segment sphérique reposant sur le fond d'un logement respectif (58) prévu dans le moyeu (12).

5. Dispositif de synchronisation (10) selon l'une quelconque des revendications précédentes, dans lequel chaque élément de support (56) comprend un plan de support (68) pour supporter l'extrémité radialement intérieure du ressort respectif (52).

6. Dispositif de synchronisation (10) selon l'une quelconque des revendications précédentes, dans lequel les billes (42) sont faites d'un matériau qui a une plus grande dureté que celui des tenons (54).
